# FASCICULE DE BREVET EUROPEEN

(11) **EP 4 177 040 B1**
(45) Date de publication et mention de la délivrance du brevet: **07.01.2026**
(21) Numéro de dépôt: 21306566.7
(22) Date de dépôt: 09.11.2021
(51) Int. Cl.: B29C 53/56, B29D 22/00, B32B 1/00, B32B 27/12, B32B 27/34, C08G 69/26, C08L 77/06, F17C 1/00, B29C 65/02, B29C 65/04, B29C 65/14, B29C 65/82, B29L 31/00

(54) **RESERVOIR POUR LE STOCKAGE DE GAZ**
TANK ZUM LAGERN VON GAS
TANK FOR STORING GAS

(43) Date de publication de la demande: 10.05.2023
(73) Titulaire: ARKEMA FRANCE, 92800 Puteaux (FR); Covess, 3510 Hasselt (BE)
(72) Inventeur: HOCHSTETTER, Gilles, 92700 COLOMBES (FR); SAVART, Thibaut, 64170 LACQ (FR); BABEAU, Arthur, 64170 LACQ (FR); SALINIER, Axel, 64170 LACQ (FR); VANSWIJGENHOVEN, Tony, 3510 HASSELT (BE); DE CLIPPELEIR, Johan, 3051 OUD-HEVERLEE (BE)
(74) Mandataire: Bandpay & Greuter

(56) Documents cités:
- EP-A1- 3 112 421
- WO-A1-2014/161753
- WO-A1-2020/109398
- WO-A1-2021/019181
- FR-A1- 3 106 525

## Description

L'invention porte sur un réservoir comportant une structure multicouche spécifique pour le stockage de gaz, notamment de gaz comprimé à haute pression et son procédé de fabrication.

L'un des buts recherchés dans le domaine du transport, et notamment dans le domaine automobile est de proposer des véhicules de moins en moins polluants. Ainsi, les véhicules électriques ou hybrides comportant une batterie visent à remplacer progressivement les véhicules thermiques, tels que les véhicules à essence ou bien à gasoil. Or, il s'avère que la batterie est un constituant du véhicule relativement complexe. Selon l'emplacement de la batterie dans le véhicule, il peut être nécessaire de la protéger des chocs et de l'environnement extérieur, qui peut être à des températures extrêmes et à une humidité variable. Il est également nécessaire d'éviter tout risque de flammes.

De plus, il est important que sa température de fonctionnement n'excède pas 55°C pour ne pas détériorer les cellules de la batterie et préserver sa durée de vie. A l'inverse, par exemple en hiver, il peut être nécessaire d'élever la température de la batterie de manière à optimiser son fonctionnement.

Par ailleurs, le véhicule électrique souffre encore aujourd'hui de plusieurs problèmes, à savoir l'autonomie de la batterie, l'utilisation dans ces batteries de terres rares, dont les ressources ne sont pas inépuisables ainsi qu'un problème de production d'électricité dans les différents pays pour pouvoir recharger les batteries.

L'hydrogène représente donc une alternative à la batterie électrique, puisque l'hydrogène peut être transformé en électricité au moyen d'une pile à combustible et alimenter ainsi les véhicules électriques.

Néanmoins, le stockage de l'hydrogène est techniquement difficile et coûteux du fait de sa très faible masse molaire et de sa très basse température de liquéfaction, tout particulièrement quand il s'agit d'un stockage mobile. Or, le stockage pour être efficace doit s'effectuer sous faible volume, ce qui impose de maintenir l'hydrogène sous forte pression, compte tenu des températures d'utilisation des véhicules. C'est le cas, en particulier, des véhicules routiers hybrides à pile à combustible pour lesquels on vise une autonomie de l'ordre de 600 à 700 km, voire moins pour des usages essentiellement urbains en complément d'une base électrique sur batteries.

Les réservoirs à hydrogène sont généralement constitués d'une enveloppe (également nommée liner) métallique, qui doit empêcher la diffusion de l'hydrogène à l'extérieur de l'enveloppe. Cette première enveloppe doit elle-même être protégée par une seconde enveloppe (en général en matériaux composites) destinée à supporter la pression interne du réservoir (par exemple, 700 bars) et résistant à d'éventuels chocs ou sources de chaleur. Par ailleurs, le réservoir comporte un système de vanne, qui doit également être sûr.

Selon le Memento sur l'hydrogène de l'association française pour l'hydrogène et la pile à combustible (AFHYPAC) Fiche 4.2, révision décembre 2016, le stockage et la distribution d'hydrogène sous pression sont une pratique standard, depuis de très nombreuses années, avec des bouteilles ou assemblages de bouteilles cylindriques, en acier, gonflées à 20 ou 25 MPa (types I et II). L'inconvénient de ce mode de stockage est l'encombrement - seulement 14 kg/m³ à 20 MPa et à température ordinaire (21°C) contre 100 kg/m³ pour le méthane - et surtout le poids, qui résulte de l'utilisation d'aciers à bas niveaux de contraintes pour éviter les problèmes de fragilisation par l'hydrogène. La situation a radicalement changé avec l'apparition de la technologie des réservoirs composites dits de type III ou IV. Leur principe de base est de séparer les deux fonctions essentielles que sont l'étanchéité et la tenue mécanique pour gérer l'une indépendamment de l'autre. Dans ce type de réservoir, une vessie en résine (thermodurcissable ou thermoplastique) dénommée liner ou gaine d'étanchéité est associée à une structure de renforcement constituée de fibres (verre, aramide, carbone) dénommée gaine ou couche de renfort. Ce type de réservoir permet de travailler à des pressions beaucoup plus élevées tout en réduisant la masse du réservoir et en évitant les risques de rupture explosive en cas d'agressions externes sévères. C'est ainsi qu'une pression de 70 MPa (700 bars) est pratiquement devenue le standard actuel.

Dans les réservoirs de type IV, la couche d'étanchéité et la couche de renfort sont constituées de matériaux différents, qui n'adhèrent pas l'un à l'autre, souvent responsables du collapse de la couche d'étanchéité, lorsque simultanément, il y a d'une part accumulation de gaz à l'interface entre la couche d'étanchéité et la couche de renfort et d'autre part, une baisse de la pression interne du réservoir. En outre, le séchage des réservoirs de type IV, qui a lieu après le test d'épreuve sous pression d'eau, est long et coûteux, car il ne peut se faire que sous vide en raison du risque de collapse de la couche d'étanchéité.

Ce problème a donné lieu au développement des réservoirs de type V, qui sont basés sur l'utilisation d'un même polymère pour la couche d'étanchéité et pour la matrice de la couche de renfort, de façon à garantir une excellente et durable soudabilité entre ces deux couches, permettant ainsi d'obtenir un réservoir monobloc.

Il est connu pour réaliser l'enveloppe composite d'utiliser, comme matrice de ce composite, des résines époxy pour fabriquer des réservoirs pouvant présenter une haute température de transition vitreuse (ci-après Tg), c'est-à-dire une Tg supérieure à 100°C. L'inconvénient de ces composites à base de résines thermodurcissables, notamment de type époxy est qu'elles sont généralement microfissurées, ce qui occasionne une grande variabilité, voire une perte de résistance mécanique. Par ailleurs, ce phénomène s'amplifie dans le temps avec les cycles successifs de remplissage/vidange des réservoirs. Il est donc nécessaire d'augmenter le taux de fibres de carbone et donc le poids et le coût du réservoir.

En outre, dans le cas des résines thermodurcissables, notamment époxy, la microfissuration nuit à l'imperméabilité du renfort composite, ce qui impose l'utilisation d'une couche d'étanchéité épaisse en interne du réservoir (i.e. réservoir de type IV).

Enfin, en termes de recyclabilité, les réservoirs actuels utilisent des couches de renfort en résines thermodurcissables, notamment époxy qui ne sont pas recyclables.

Toutefois, malgré les améliorations apportées aux réservoirs de type IV, ils présentent encore des inconvénients. Il est notamment recherché d'accélérer la vitesse de remplissage du réservoir. Or, la tenue en température des réservoirs de gaz, notamment des réservoirs pour hydrogène, est trop faible avec les solutions actuelles. Accélérer la vitesse de remplissage du réservoir serait un avantage, notamment économique pour le consommateur, notamment sans avoir en plus à refroidir l'hydrogène à -60°C avant le remplissage.

L'utilisation d'une couche de renfort en polyphtalamide (ci-après noté PPA) de haute température de transition vitreuse (ci-après Tg) serait un avantage important en termes de tenue mécanique à haute température. En outre, ce type de résine étant thermoplastique, elle permettrait d'obtenir un réservoir facilement recyclable. Le caractère thermoplastique de la résine permettrait de réduire le niveau de microfissuration de l'enveloppe composite, renforçant ainsi sa résistance mécanique et réduisant la variabilité de cette résistance mécanique, ce qui permettrait de réduire significativement la quantité de fibres de carbone utilisée et donc le coût et l'empreinte carbone du réservoir de type V par rapport à ceux de type IV. En outre, la nature semi-cristalline de la résine permettrait d'augmenter son étanchéité aux gaz, et notamment à l'hydrogène. Par conséquent, l'enveloppe composite contribuerait à l'imperméabilité du réservoir et de ce fait permettrait de réduire l'épaisseur de la couche d'étanchéité et donc le coût et le poids de la couche d'étanchéité interne au réservoir.

Cependant, la fabrication de ce type de réservoirs par enroulement de rubans composites à chaud, sur une couche d'étanchéité en polymère thermoplastique, pose des difficultés, liées à l'apparition de contraintes résiduelles importantes, d'origine thermique, inhérentes aux dilatations différentielles des matériaux mis en jeu, en particulier inhérentes aux dilatations différentielles entre les fibres et le polymère composant la couche d'étanchéité, lors du refroidissement du réservoir, à la fin de sa fabrication. Ceci est particulièrement exacerbé dans le cas d'une matrice PPA composant le renfort composite à base de fibres de carbone. En effet, la température élevée de mise en œuvre du ruban composite à base de PPA, du fait du haut point de fusion de ce type de résine, ainsi que sa haute Tg, sont les sources majoritaires responsables des contraintes résiduelles supplémentaires dans le réservoir. Lorsque le réservoir comporte des inserts moulés en résine de type polyamide de basse Tg, typiquement de Tg de l'ordre de 50°C, en particulier de type polyamide 11 (PA11), lesdites contraintes résiduelles peuvent conduire à une déformation des inserts, empêchant la fabrication complète du réservoir et notamment la fixation des embases fermant le réservoir. Lorsque le réservoir est de type V (ou 4.5, c'est-à-dire que le polymère composant la matrice du composite est de nature différente de celle de la couche d'étanchéité, mais les deux polymères restent compatibles et soudables entre eux) et qu'il comporte une couche d'étanchéité en polyamide de basse Tg, en particulier de type PA11, les contraintes résiduelles peuvent conduire à une décohésion au sein de la couche de renfort composite elle-même.

De tels réservoirs selon l'état de la technique sont décrits dans les documents WO 2021/019181 A1, WO 2020/109398 A1, FR 3 106 525 A1, EP 3 112 421 A1 ou encore WO 2014/161753 A1.

Par conséquent, il est recherché aujourd'hui des réservoirs présentant une bonne tenue mécanique à haute température, recyclable, présentant une bonne étanchéité aux gaz, et dont la fabrication est aisée. Il est notamment recherché une structure de réservoir, qui réduit le niveau de contraintes mécaniques résiduelles, entre le composite et la couche d'étanchéité et entre le composite et les inserts moulés, liées aux différences thermiques subies par le réservoir lors de sa fabrication. Ces réservoirs permettraient ainsi de stocker de l'hydrogène mais également tout type de gaz sous pression, et notamment sous haute pression.

Ce problème est résolu par un réservoir comportant une structure multicouche particulière.

L'invention porte sur un réservoir comprenant une structure multicouche, pour le stockage de gaz comprimé, de préférence sous haute pression, en particulier l'hydrogène, comprenant au moins les trois couches successives suivantes, de l'intérieur vers l'extérieur :
- au moins une couche d'étanchéité consistant en une composition comprenant majoritairement au moins un polyamide thermoplastique semi-cristallin, de préférence aliphatique, présentant une température de fusion (Tf), mesurée selon la norme ISO 11357-3 : 2013, inférieure ou égale à 280°C, de préférence inférieure ou égale à 260°C, de préférence inférieure ou égale à 230°C, et plus particulièrement inférieure ou égale à 200°C,
- au moins une couche de renfort composite intermédiaire constituée d'un matériau fibreux sous forme de fibres continues imprégné par une composition comprenant majoritairement au moins un polyamide thermoplastique semi-cristallin, de préférence aliphatique, présentant une Tg mesurée selon la norme ISO 11357 -3 : 2013, inférieure à 100°C, de préférence inférieure ou égale à 80°C, en particulier inférieure ou égale à 60°C,
- au moins une couche de renfort composite externe constituée d'un matériau fibreux sous forme de fibres continues imprégné par une composition comprenant majoritairement au moins un polyphtalamide présentant une Tg, mesurée selon la norme ISO 11357 -3 : 2013, supérieure à 80° C, de préférence supérieure à 100°C,

la couche d'étanchéité la plus externe étant soudée à la couche de renfort composite intermédiaire la plus interne et
la couche de renfort composite intermédiaire la plus externe étant soudée à la couche de renfort composite externe la plus interne.

Les inventeurs ont trouvé qu'en intercalant une couche de renfort composite de type polyamide thermoplastique semi-cristallin, de préférence aliphatique, de Tg < 100°C, entre une couche spécifique d'étanchéité et une couche spécifique de renfort composite en PPA, les problèmes évoqués ci-dessus étaient résolus.

En effet, le réservoir selon l'invention est facile à fabriquer, il permet un remplissage et une vidange rapides. Il présente une haute étanchéité aux gaz et se caractérise par un faible poids.

L'invention vise également un procédé de fabrication du réservoir selon l'invention.

L'invention porte enfin sur l'utilisation du réservoir selon l'invention pour le stockage de gaz sous pression, en particulier l'hydrogène, GPL ou GNV, air comprimé.

D'autres caractéristiques, aspects, objets et avantages de la présente invention apparaîtront encore plus clairement à la lecture de la description qui suit.

Il est par ailleurs précisé que les expressions "compris entre... et..." et "de... à..." utilisées dans la présente description doivent s'entendre comme incluant chacune des bornes mentionnées.

### Le réservoir

Le réservoir selon l'invention comprend une structure multicouche, pour le stockage de gaz comprimé, en particulier l'hydrogène, comprenant au moins les trois couches successives suivantes, de l'intérieur vers l'extérieur :
- au moins une couche d'étanchéité consistant en une composition comprenant majoritairement au moins un polyamide thermoplastique semi-cristallin, de préférence aliphatique, présentant une Tf, mesurée selon la norme ISO 11357-3 : 2013, inférieure ou égale à 280°C, de préférence inférieure ou égale à 260°C, de préférence inférieure ou égale à 230°C, et plus particulièrement inférieure ou égale à 200°C,
- au moins une couche de renfort composite intermédiaire constituée d'un matériau fibreux sous forme de fibres continues imprégné par une composition comprenant majoritairement au moins un polyamide thermoplastique semi-cristallin, de préférence aliphatique présentant une Tg mesurée selon la norme ISO 11357 -3 : 2013, inférieure à 100°C, de préférence inférieure ou égale à 80°C, en particulier inférieure ou égale à 60°C,
- au moins une couche externe de renfort composite constituée d'un matériau fibreux sous forme de fibres continues imprégné par une composition comprenant majoritairement au moins un polyphtalamide présentant une Tg, mesurée selon la norme ISO 11357 -3 : 2013, supérieure à 80° C, de préférence supérieure ou égale à 100°C,

la couche d'étanchéité la plus externe étant soudée à la couche de renfort composite intermédiaire la plus interne et
la couche de renfort composite intermédiaire la plus externe étant soudée à la couche de renfort composite la plus interne.

Les couches de la structure selon l'invention comportent toutes majoritairement un polyamide.

La nomenclature utilisée pour définir les polyamides est décrite dans la norme ISO 1874-1 : 2011 "Plastiques - Matériaux polyamides (PA) pour moulage et extrusion - Partie 1 : Désignation", notamment en page 3 (tableaux 1 et 2) et est bien connue de l'homme du métier. Dans la notation PAL, PA désigne polyamide et L désigne le nombre d'atome de carbone de l'aminoacide ou bien du lactame. Ainsi, le polyamide est obtenu par la polycondensation de l'aminoacide ou du lactame comportant L atomes de carbone. Dans la notation PAMN, M désigne le nombre d'atome de carbone de la diamine et N désigne le nombre d'atome de carbone du diacide.

On entend selon l'invention par « polyamide thermoplastique semi-cristallin », un matériau généralement solide à température ambiante et qui se ramollit lors d'une augmentation de température, en particulier après passage de sa température de transition vitreuse (Tg), et pouvant présenter une fusion franche au passage de sa température dite de fusion (Tf), et qui redevient solide lors d'une diminution de température en dessous de sa température de cristallisation (Tc).

La température de transition vitreuse Tg, la température de cristallisation Tc et la température de fusion Tf sont déterminées par analyse calorimétrique différentielle (DSC) selon la norme 11357-2 : 2013 et 11357-3 : 2013 respectivement.

### S'agissant de la couche d'étanchéité

Une ou plusieurs couches d'étanchéité est ou peuvent être présente(s) dans la structure multicouche du réservoir selon l'invention.

Chacune desdites couches est constituée d'une composition comprenant majoritairement au moins un polyamide thermoplastique semi-cristallin présentant une Tf, mesurée selon la norme ISO 11357-3 : 2013, inférieure ou égale à 280°C, de préférence inférieure ou égale à 260°C, de préférence inférieure ou égale à 230°C, et plus particulièrement inférieure ou égale à 200°C.

Le terme « majoritairement » signifie que ledit au moins un polyamide est présent à plus de 50% en poids par rapport au poids total de la composition.

Avantageusement, ledit au moins un polyamide majoritaire est présent à plus de 60% en poids, notamment à plus de 70% en poids, particulièrement à plus de 80% en poids, plus particulièrement supérieur ou égal à 90% en poids par rapport au poids total de la composition.

Ladite composition peut également comprendre des modifiants choc et/ou des additifs. Toutefois, la couche barrière ne doit pas relarguer de composés néfastes dans le gaz stocké, ni comprendre des particules susceptibles de réduire sa perméabilité. Ainsi, l'homme du métier veillera à choisir les additifs de la composition, ainsi que leur teneur de manière à éviter ce relargage.

Les additifs peuvent être choisis parmi un antioxydant, un stabilisant à la chaleur, un absorbeur d'UV, un stabilisant à la lumière, un lubrifiant, une charge inorganique, un agent ignifugeant, un agent nucléant, un plastifiant, un colorant, du noir de carbone et des nanocharges carbonées.

Avantageusement, ladite composition est constituée majoritairement d'un ou plusieurs polyamides thermoplastiques semi-cristallins définis ci-dessus, de 0 à 5% en poids de modifiant choc, de 0 à 5% en poids d'additifs, la somme des constituants de la composition étant égale, en poids, à 100%.

Dans un mode de réalisation du réservoir selon l'invention, un seul polyamide majoritaire est présent dans la couche d'étanchéité.

Avantageusement, la composition constituant la couche d'étanchéité est de couleur noire et est susceptible d'absorber un rayonnement adapté à la soudure.

Afin de les rendre absorbants, il est connu de leur ajouter divers additifs, dont par exemple le noir de carbone, qui confère au polymère une couleur noire et permet de mieux absorber un rayonnement adapté à la soudure.

### Polyamide thermoplastique semi-cristallin

Le polyamide thermoplastique semi-cristallin peut être un homopolyamide ou un copolyamide.

Avantageusement, le polyamide thermoplastique semi-cristallin compris dans la couche d'étanchéité présente un rapport du nombre d'atome de carbone sur le nombre d'atome d'azote dans le polyamide noté C/N supérieur ou égal à 5, de préférence supérieur ou égal à 8, en particulier supérieur ou égal à 9, et plus particulièrement supérieure ou égal à 10.

De préférence, le polyamide thermoplastique semi-cristallin est choisi parmi PA410, PA 56, PA59, PA510, PA512, PA513, PA 514, PA6, PA 66, PA 69, PA610, PA612, PA614, PA618, PA1010, PA1012, PApip10, PApip12, PA1014, PA1018, PA1210, PA1212, PA1214, PA1218, PA11 et PA12, de préférence PA410, PA510, PA 69, PA610, PA 512, PA612, PA 514, PA614, PA618, PA1010, PA1012, PA1014, PA1018, PA1214, PA1218, PA11 et PA12, PA 11/5T, PA 11/6T et PA11/10T, de manière très préférée PA 11 ou PA12, et leur mélange.

La teneur en motif 11 dans les copolyamides semi-aromatique est ajustée de manière à ce que le copolyamide présente une température de fusion inférieure ou égale à 280°C, de préférence inférieure ou égale à 260°C, de préférence inférieure ou égale à 230°C, et plus particulièrement inférieure ou égale à 200°C.

Dans un mode de réalisation préféré, ledit polyamide thermoplastique semi-cristallin est un polyamide thermoplastique semi-cristallin aliphatique.

De préférence, le polyamide thermoplastique semi-cristallin compris dans la couche d'étanchéité est un polyamide thermoplastique semi-cristallin aliphatique, en particulier choisi parmi PA410, PA 56, PA59, PA510, PA512, PA513, PA 514, PA6, PA 66, PA 69, PA610, PA612, PA614, PA618, PA1010, PA1012, PApip10, PApip12, PA1014, PA1018, PA1210, PA1212, PA1214, PA1218, PA11 et PA12, de préférence PA6, PA66, PA410, PA510, PA 69, PA610, PA 512, PA612, PA 514, PA614, PA618, PA1010, PA1012, PA1014, PA1018, PA1214, PA1218, PA11 et PA12, de manière très préférée PA 11 ou PA12, et leur mélange.

En particulier, le polyamide thermoplastique semi-cristallin aliphatique est choisi parmi le polyamide 11 (PA11), le polyamide 12 (PA12), le polyamide 1010 (PA1010), le polyamide 1012 (PA1012), en particulier le PA11 et le PA12.

La composition constituant la couche d'étanchéité comprend un polyamide tel que défini ci-dessus majoritairement ou bien un mélange de ces polyamides définis ci-dessus. Ce mélange est majoritairement présent dans la composition.

### S'agissant de la couche de renfort composite intermédiaire

Une ou plusieurs couches de renfort composite est ou peuvent être présente(s), en tant que couche intermédiaire.

Chacune desdites couches est constituée d'un matériau fibreux sous forme de fibres continues imprégné par une composition comprenant majoritairement au moins un polyamide thermoplastique semi-cristallin, de préférence aliphatique présentant une Tg mesurée selon la norme ISO 11357 -3: 2013, inférieure à 100°C, de préférence inférieure ou égale à 80°C, en particulier inférieure ou égale à 60°C.

Le terme « majoritairement » signifie que ledit au moins un polymère est présent à plus de 50% en poids par rapport au poids total de la composition.

Avantageusement, ledit au moins un polymère majoritaire est présent à plus de 60% en poids notamment à plus de 70% en poids, particulièrement à plus de 80% en poids, plus particulièrement supérieur ou égal à 90% en poids, par rapport au poids total de la composition.

Ladite composition peut également comprendre des modifiants choc et/ou des additifs.

Les additifs peuvent être choisis parmi un antioxydant, un stabilisant à la chaleur, un absorbeur d'UV, un stabilisant à la lumière, un lubrifiant, une charge inorganique, un agent ignifugeant, un agent nucléant, un plastifiant, un colorant, du noir de carbone et des nanocharges carbonées.

Avantageusement, ladite composition est constituée majoritairement d'un ou plusieurs polyamides thermoplastiques semi-cristallins définis ci-dessus, de 0 à 5% en poids de modifiant choc, de 0 à 5% en poids d'additifs, la somme des constituants de la composition étant égale, en poids, à 100%.

Dans un mode de réalisation du réservoir selon l'invention, un seul polyamide majoritaire est présent dans la couche imprégnant le matériau fibreux de la couche de renfort composite intermédiaire.

Avantageusement, la composition constituant la couche dans la couche imprégnant le matériau fibreux de la couche de renfort composite intermédiaire est de couleur noire et est susceptible d'absorber un rayonnement adapté à la soudure.

Afin de les rendre absorbants, il est connu de leur ajouter divers additifs, dont par exemple le noir de carbone, qui confère au polymère une couleur noire et permet de mieux absorber un rayonnement adapté à la soudure.

### Polyamide thermoplastique semi-cristallin

Le polyamide thermoplastique semi-cristallin aliphatique peut être un homopolyamide ou un copolyamide.

De préférence, le polyamide thermoplastique semi-cristallin est choisi parmi PA410, PA 56, PA59, PA510, PA512, PA513, PA 514, PA6, PA 66, PA 69, PA610, PA612, PA614, PA618, PA1010, PA1012, PApip10, PApip12, PA1014, PA1018, PA1210, PA1212, PA1214, PA1218, PA11 et PA12, de préférence PA410, PA510, PA 69, PA610, PA 512, PA612, PA 514, PA614, PA618, PA1010, PA1012, PA1014, PA1018, PA1214, PA1218, PA11 et PA12, PA 11/5T, PA 11/6T et PA11/10T, de manière très préférée PA 11 ou PA12, et leur mélange.

La teneur en motif 11 dans les copolyamides semi-aromatique est ajustée de manière à ce que le copolyamide présente une température de transition vitreuse inférieure à 100°C, de préférence inférieure ou égale à 80°C, en particulier inférieure ou égale à 60°C.

Dans un mode de réalisation préféré, ledit polyamide thermoplastique semi-cristallin est un polyamide thermoplastique semi-cristallin aliphatique

Avantageusement, le polyamide thermoplastique semi-cristallin aliphatique compris dans la composition, qui imprègne le matériau fibreux est choisi parmi PA410, PA 56, PA59, PA510, PA512, PA513, PA 514, PA6, PA 66, PA 69, PA610, PA612, PA614, PA618, PA1010, PA1012, PApip10, PApip12, PA1014, PA1018, PA1210, PA1212, PA1214, PA1218, PA11 et PA12, de préférence PA6, PA66, PA410, PA510, PA 69, PA610, PA 512, PA612, PA 514, PA614, PA618, PA1010, PA1012, PA1014, PA1018, PA1214, PA1218, PA11 et PA12, et leur mélange.

En particulier, le polyamide thermoplastique semi-cristallin aliphatique est choisi parmi le polyamide 11 (PA11), le polyamide 12 (PA12), le polyamide 1010 (PA1010), le polyamide 1012 (PA1012), en particulier le PA11 et le PA12.

### S'agissant de la couche de renfort composite externe

Une ou plusieurs couches de renfort composite peut ou peuvent être présente(s) en tant que couche externe.

Chacune desdites couches est constituée d'une composition comprenant majoritairement au moins un polyphthalamide présentant une Tg, mesurée selon la norme ISO 11357 -3 : 2013, supérieure à 80° C, de préférence supérieure ou égale à 100°C.

Le terme « majoritairement » signifie que ledit au moins un polymère est présent à plus de 50% en poids par rapport au poids total de la composition.

Avantageusement, ledit au moins un polymère majoritaire est présent à plus de 60% en poids notamment à plus de 70% en poids, particulièrement à plus de 80% en poids, plus particulièrement supérieur ou égal à 90% en poids, par rapport au poids total de la composition,
Ladite composition peut également comprendre des modifiants choc et/ou des additifs.

Les additifs peuvent être choisis parmi un antioxydant, un stabilisant à la chaleur, un absorbeur d'UV, un stabilisant à la lumière, un lubrifiant, une charge inorganique, un agent ignifugeant, un agent nucléant, un plastifiant, un colorant, du noir de carbone et des nanocharges carbonées.

Avantageusement, ladite composition est constituée majoritairement d'un ou plusieurs polyamides thermoplastiques semi-cristallins définis ci-dessus, de 0 à 5% en poids de modifiant choc, de 0 à 5% en poids d'additifs, la somme des constituants de la composition étant égale, en poids, à 100%.

Dans un mode de réalisation du réservoir selon l'invention, un seul polyamide majoritaire est présent dans la couche dans la couche imprégnant le matériau fibreux de la couche de renfort composite externe.

Avantageusement, la composition est de couleur noire et est susceptible d'absorber un rayonnement adapté à la soudure.

Afin de les rendre absorbants, il est connu de leur ajouter divers additifs, dont par exemple le noir de carbone, qui confère au polymère une couleur noire et permet de mieux absorber un rayonnement adapté à la soudure.

### Polyphtalamide

Le polyamide peut être un homopolyamide ou un copolyamide.

Avantageusement, les polyamides semi-cristallins sont des polyamides semi-aromatiques, notamment un polyamide semi-aromatique de formule X/YAr, tel que décrits dans EP1505099, notamment un polyamide semi-aromatique de formule A/XT dans laquelle A est choisi parmi un motif obtenu à partir d'un aminoacide, un motif obtenu à partir d'un lactame et un motif répondant à la formule (diamine en Ca).(diacide en Cb), avec a représentant le nombre d'atomes de carbone de la diamine et b représentant le nombre d'atome de carbone du diacide, a et b étant chacun compris entre 4 et 36, avantageusement entre 9 et 18, le motif (diamine en Ca) étant choisi parmi les diamines aliphatiques, linéaires ou ramifiés, les diamines cycloaliphatiques et les diamines alkylaromatiques et le motif (diacide en Cb) étant choisi parmi les diacides aliphatiques, linéaires ou ramifiés, les diacides cycloaliphatiques et les diacides aromatiques,

X.T désigne un motif obtenu à partir de la polycondensation d'une diamine en Cx et de l'acide téréphtalique, avec x représentant le nombre d'atomes de carbone de la diamine en Cx, x étant compris entre 5 et 36, avantageusement entre 9 et 18.

De préférence, le polyamide compris dans la couche imprégnant le matériau fibreux de la couche de renfort composite externe est de formule A/5T, A/6T, A/9T, A/10T, A/11T, A/BACT, A/MPMDT ou A/MXDT, A étant tel que défini ci-dessus, en particulier un copolyamide choisi parmi un PA MPMDT/6T, PA 11/10T, PA 5T/10T, PA 11/6T/10T, PA MXDT/4T, PA MXDT/6T, PA MXDT/10T, PA MPMDT/4T, PA MPMDT/6T, PA MPMDT/10T, PA 11/MXDT/4T, PA 11/MXDT/6T, PA 11/MXDT/10T, PA 11/MPMDT/4T, PA 11/MPMDT/6T, PA 11/MPMDT/10T, PA 11/MXDT/10T, PA11/5T/10T, PA 11/BACT, PA BACT/10T, PA BACT/6T, PA BACT/4T, PA BACT/10T/6T, PA 11/BACT/4T, PA 11/BACT/6T, PA 11/BACT/10T et leur mélange.

T signifie l'acide téréphtalique, MXD signifie la m-xylylène diamine, MPMD signifie la 2-méthylpentaméthylène diamine et BAC signifie bis(aminométhyl)cyclohexane.

Ladite composition peut également comprendre des modifiants choc et/ou des additifs.

Les additifs peuvent être choisis parmi un antioxydant, un stabilisant à la chaleur, un absorbeur d'UV, un stabilisant à la lumière, un lubrifiant, une charge inorganique, un agent ignifugeant, un agent nucléant, un plastifiant et un colorant.

Avantageusement, ladite composition est constituée d'un ou plusieurs polyphtalamides présentant une Tg, mesurée selon la norme ISO 11357 -3 : 2013, supérieure à 80° C, de 0 à 5% en poids de modifiant choc, de 0 à 5% en poids d'additifs, la somme des constituants de la composition étant égale à 100%.

Ledit au moins un polymère majoritaire de chaque couche peut être identique ou différent.

Dans un mode de réalisation, un seul polyphtalamide est présent majoritairement dans la couche externe de renfort composite soudée à la couche intermédiaire.

Avantageusement, les nanocharges carbonées sont non agglomérées ou non agrégées.

Avantageusement, les nanocharges carbonées sont incorporées dans la composition en une quantité de 100 ppm à 500 ppm, et de préférence de 100 ppm à 250 ppm.

Avantageusement, les nanocharges carbonées sont choisies parmi les nanotubes de carbone (NTC), les nanofibres de carbone, le graphène, le noir de carbone nanométrique et leurs mélanges.

Avantageusement, les nanocharges carbonées sont dépourvues de noir de carbone nanométrique.

### S'agissant du matériau fibreux

Concernant les fibres de constitution dudit matériau fibreux présent dans les couches intermédiaire et externe, ce sont notamment des fibres d'origine minérale, organique ou végétale.

Avantageusement, ledit matériau fibreux peut être ensimé ou non ensimé.

Ledit matériau fibreux peut donc comprendre jusqu'à 0,1% en poids d'un matériau de nature organique (type résine thermodurcissable ou thermoplastique) dénommé ensimage.

Parmi les fibres d'origine minérale, on peut citer les fibres de carbone, les fibres de verre, les fibres de basalte ou à base de basalte, les fibres de silice, ou les fibres de carbure de silicium par exemple. Parmi les fibres d'origine organique, on peut citer les fibres à base de polymère thermoplastique ou thermodurcissable, telles que des fibres de polyamides semi-aromatiques, des fibres d'aramide ou des fibres en polyoléfines par exemple. De préférence, elles sont à base de polymère thermoplastique amorphe et présentent une température de transition vitreuse Tg supérieure à la Tg du polymère ou mélange de polymère thermoplastique de constitution de la matrice de pré-imprégnation lorsque ce dernier est amorphe, ou supérieure à la Tf du polymère ou mélange de polymère thermoplastique de constitution de la matrice de pré-imprégnation lorsque ce dernier est semi-cristallin. Avantageusement, elles sont à base de polymère thermoplastique semi-cristallin et présentent une température de fusion Tf supérieure à la Tg du polymère ou mélange de polymère thermoplastique de constitution de la matrice de pré-imprégnation lorsque ce dernier est amorphe, ou supérieure à la Tf du polymère ou mélange de polymère thermoplastique de constitution de la matrice de pré-imprégnation lorsque ce dernier est semi-cristallin. Ainsi, il n'y a aucun risque de fusion pour les fibres organiques de constitution du matériau fibreux lors de l'imprégnation par la matrice thermoplastique du composite final.

Parmi les fibres d'origine végétale, on peut citer les fibres naturelles à base de lin, de chanvre, de lignine, de bambou, de soie notamment d'araignée, de sisal, et d'autres fibres cellulosiques, en particulier de viscose. Ces fibres d'origine végétale peuvent être utilisées pures, traitées ou bien enduites d'une couche d'enduction, en vue de faciliter l'adhérence et l'imprégnation de la matrice de polymère thermoplastique.

Le matériau fibreux peut également être un tissu, tressé ou tissé avec des fibres.

Il peut également correspondre à des fibres avec des fils de maintien.

Ces fibres de constitution peuvent être utilisées seules ou en mélange. Ainsi, des fibres organiques peuvent être mélangées aux fibres minérales pour être pré-imprégnées de poudre polymère thermoplastique et former le matériau fibreux pré-imprégné.

Les mèches de fibres organiques peuvent avoir plusieurs grammages. Elles peuvent en outre présenter plusieurs géométries. Les fibres de constitution du matériau fibreux peuvent en outre se présenter sous forme d'un mélange de ces fibres de renfort de différentes géométries. Les fibres sont des fibres continues.

De préférence, le matériau fibreux est constitué par des fibres continues choisies parmi des fibres de verre, des fibres de carbone, les fibres de basalte ou à base de basalte, en particulier des fibres de carbone. Il est utilisé sous forme d'une mèche ou de plusieurs mèches.

### S'agissant de la structure multicouche

Ladite structure multicouche comprend donc au moins une couche d'étanchéité, au moins une couche de renfort composite intermédiaire et au moins une couche de renfort composite externe. Ces couches, qui sont adjacentes les unes aux autres sont toutes soudées, les unes aux autres.

Dans un mode de réalisation, dans ladite structure multicouche, chaque polyamide compris dans la composition constituant chaque couche d'étanchéité est partiellement ou totalement miscible avec chaque polyamide compris dans la composition constituant chaque couche d'étanchéité, qui lui est adjacente.

Il en est de même pour les couches de renfort composite intermédiaires, lorsque la structure en comprend plusieurs.

Il en est encore de même pour les couches de renfort composite externes, lorsque que la structure en comprend plusieurs.

De plus, la couche d'étanchéité la plus externe est soudée à la couche de renfort composite intermédiaire la plus interne et la couche de renfort composite intermédiaire la plus externe est soudée à la couche de renfort composite externe la plus interne.

Cette soudure des différentes couches conduit à une miscibilité totale ou partielle des compositions et/ou des matrices comprises dans les couches.

La miscibilité totale ou partielle desdits compositions est définie par le ratio composé de la différence des températures de transition vitreuse des deux compositions de deux couches adjacentes, rapportées à la différence des températures de transition vitreuse des deux compositions, avant le mélange par soudure de ces deux compositions.

La miscibilité est totale, lorsque ledit ratio est égal à 0, et la miscibilité est partielle, lorsque ledit ratio est différent de 0 et inférieur à 1, en valeur absolue. Une immiscibilité du polyamide compris dans la composition constituant la couche d'étanchéité avec le polyamide compris dans la composition qui imprègne le matériau fibreux de la couche intermédiaire est exclue. De même, une immiscibilité du polyamide compris dans la composition qui imprègne le matériau fibreux de la couche intermédiaire avec le polyamide dans la composition qui imprègne le matériau fibreux de la couche externe est exclue.

Avantageusement, lorsque la miscibilité desdits compositions est partielle, ledit ratio est inférieur à 30%, préférentiellement inférieure à 20%, en valeur absolue.

Dans un mode de réalisation, la ou les températures de transition vitreuse du mélange, selon que la miscibilité est totale ou partielle, doivent être comprises entre les températures de transition vitreuse desdits polyamides avant mélange et différentes d'elles, d'au moins 5°C, de préférence d'au moins 10°C.

L'expression « totalement miscible » signifie que lorsque par exemple, deux polyamides notés PAa et PAb présentant respectivement une Tga et une Tgb, sont présents respectivement dans deux couches d'étanchéité ou deux couches de renfort adjacentes, et que Tga est inférieure à Tgb, alors le mélange des deux polyamides ne présente qu'une seule Tgab, dont la valeur est comprise entre Tga et une Tgb.

Cette valeur Tgab est alors supérieure à Tga d'au moins 5°C, en particulier d'au moins 10°C et inférieure à Tgb d'au moins 5°C, en particulier d'au moins 10°C.

L'expression « partiellement miscible » signifie que lorsque par exemple, deux polyamides PAa et PAb présentant respectivement une Tga et une Tgb, sont présents respectivement dans deux couches d'étanchéité ou deux couches de renfort adjacentes, alors le mélange des deux polyamides présente deux Tg : Tg'a et Tg'b, avec Tga < Tg'a < Tg'b < Tgb.

Ces valeurs Tg'a et Tg'b sont alors supérieures à Tga d'au moins 5°C, en particulier d'au moins 10°C et inférieure à Tgb d'au moins 5°C, en particulier d'au moins 10°C.

Une immiscibilité de deux polyamides se traduit par la présence de deux Tg, Tga et Tgb, dans le mélange des deux polyamides qui correspondent aux Tg respectives Tga et Tgb des polymères purs pris séparément.

On ne sortirait pas de l'invention si les températures de transition vitreuse dans le mélange des deux polyamides étaient identiques ou différentes aux températures avant mélange, mais que ces deux polyamides étaient réactifs entre eux.

Avantageusement, lesdites couches d'étanchéité et de renfort intermédiaire soudées sont constituées de compositions qui comprennent respectivement des polyamides différents et lesdites couches de renfort intermédiaire et de renfort externe sont constituées de compositions qui comprennent respectivement des polyamides différents.

Ladite structure multicouche peut comprendre jusqu'à 300 couches d'étanchéité, jusqu'à 10 couches de renfort composite intermédiaire et jusqu'à 300 couches de renfort composite externe.

Il est bien évident que ladite structure multicouche n'est pas obligatoirement symétrique et qu'elle peut donc comprendre plus de couches d'étanchéité que de couches composites ou vice et versa.

Avantageusement, ladite structure multicouche comprend une, deux, trois, quatre, cinq, six, sept, huit, neuf ou dix couches d'étanchéité, une, deux, trois, quatre, cinq, six, sept, huit, neuf ou dix couches de renfort composite intermédiaire et une, deux, trois, quatre, cinq, six, sept, huit, neuf ou dix couches de renfort composite externe.

Avantageusement, ladite structure multicouche comprend une, deux, trois, quatre ou cinq, couches d'étanchéité, une, deux, trois, quatre ou cinq couches de renfort composite intermédiaire et une, deux, trois, quatre ou cinq couches de renfort composite externe.

Avantageusement, ladite structure multicouche comprend une, deux ou trois couches d'étanchéité et une deux ou trois couches de renfort composite. Avantageusement, elles sont constituées de compositions, qui comprennent respectivement des polyamides différents.

Dans un mode de réalisation préféré, le réservoir selon l'invention comprend une structure multicouche, qui comprend une seule couche d'étanchéité, une seule couche de renfort composite intermédiaire et une seule couche de renfort composite externe, ladite couche d'étanchéité étant soudée à ladite couche de renfort composite intermédiaire adjacente et ladite couche de renfort composite intermédiaire étant soudée à ladite couche de renfort composite externe adjacente, ladite couche de renfort composite intermédiaire présentant de préférence une épaisseur comprise entre 1 et 30%, plus particulièrement une épaisseur comprise entre 1 et 10%, encore plus de préférée comprise entre 1 et 5% par rapport à l'épaisseur de la totalité des couches de renfort composite de la structure multicouche, c'est -à-dire de la ou des couches de renfort composite intermédiaire et de la ou des couches de renfort composite externe.

Dans un autre mode de réalisation, le réservoir selon l'invention comprend une structure multicouche, qui comprend une seule couche d'étanchéité, une seule couche de renfort composite intermédiaire et une seule couche de renfort composite externe, ladite couche d'étanchéité étant soudée à ladite couche de renfort composite intermédiaire adjacente et ladite couche de renfort composite intermédiaire étant soudée à ladite couche de renfort composite externe adjacente, la composition de ladite couche d'étanchéité étant identique à celle de ladite couche de renfort composite intermédiaire et ladite couche de renfort composite intermédiaire présentant de préférence une épaisseur comprise entre 1 et 30%, plus particulièrement une épaisseur comprise entre 1 et 10%, encore plus de préférée comprise entre 1 et 5% par rapport à l'épaisseur de la totalité des couches de renfort composite de la structure multicouche.

Dans un autre mode de réalisation préféré, le réservoir selon l'invention comprend une structure multicouche, qui comprend :
- une seule couche d'étanchéité consistant en une composition comprenant majoritairement au moins un polyamide thermoplastique semi-cristallin, de préférence aliphatique, présentant une température de fusion (Tf), mesurée selon la norme ISO 11357-3 : 2013, inférieure ou égale à 230°C,
- une seule couche de renfort composite intermédiaire constituée d'un matériau fibreux sous forme de fibres continues imprégné par une composition comprenant majoritairement au moins un polyamide thermoplastique semi-cristallin, de préférence aliphatique, présentant une Tg mesurée selon la norme ISO 11357 -3 : 2013, inférieure à 60°C et
- une seule couche de renfort composite externe, constituée d'un matériau fibreux sous forme de fibres continues imprégné par une composition comprenant majoritairement au moins un polyphtalamide présentant une Tg, mesurée selon la norme ISO 11357 -3 : 2013, supérieure à 100°C,
la couche d'étanchéité étant soudée à la couche de renfort composite intermédiaire et la couche de renfort composite intermédiaire étant soudée à la couche de renfort composite externe.

Selon un mode de réalisation préféré, toutes les couches de renfort composite sont à base de fibres de carbone.

Selon un mode de réalisation préféré, le réservoir selon l'invention comprend une structure multicouche, pour le stockage de gaz comprimé, en particulier l'hydrogène, comprenant au moins les trois couches successives suivantes, de l'intérieur vers l'extérieur :
- au moins une couche d'étanchéité consistant en une composition comprenant majoritairement au moins un polyamide thermoplastique semi-cristallin présentant une Tf, mesurée selon la norme ISO 11357-3: 2013, inférieure ou égale à 280°C et choisi parmi PA410, PA 56, PA59, PA510, PA512, PA513, PA 514, PA6, PA 66, PA 69, PA610, PA612, PA614, PA618, PA1010, PA1012, PApip10, PApip12, PA1014, PA1018, PA1210, PA1212, PA1214, PA1218, PA11, PA12, PA 11/5T, PA 11/6T et PA11/10T de préférence PA410, PA510, PA 69, PA610, PA 512, PA612, PA 514, PA614, PA618, PA1010, PA1012, PA1014, PA1018, PA1214, PA1218, PA11 et PA12, de préférence PA 11 ou PA12, et leur mélange,
- au moins une couche de renfort composite intermédiaire constituée d'un matériau fibreux sous forme de fibres continues imprégné par une composition comprenant majoritairement au moins un polyamide thermoplastique semi-cristallin présentant une Tg mesurée selon la norme ISO 11357 -3: 2013, inférieure à 100°C, de préférence inférieure ou égale à 80°C, en particulier inférieure ou égale à 60°C, et choisi parmi PA410, PA 56, PA59, PA510, PA512, PA513, PA 514, PA6, PA 66, PA 69, PA610, PA612, PA614, PA618, PA1010, PA1012, PApip10, PApip12, PA1014, PA1018, PA1210, PA1212, PA1214, PA1218, PA11, PA12, PA 11/5T, PA 11/6T et PA11/10T de préférence PA6, PA66, PA410, PA510, PA 69, PA610, PA 512, PA612, PA 514, PA614, PA618, PA1010, PA1012, PA1014, PA1018, PA1214, PA1218, PA11 et PA12, de préférence PA 11 ou PA12, et leur mélange,
- au moins une couche externe de renfort composite constituée d'un matériau fibreux sous forme de fibres continues imprégné par une composition comprenant majoritairement au moins un polyphtalamide présentant une Tg, mesurée selon la norme ISO 11357 -3: 2013, supérieure à 80° C, de préférence supérieure à 100°C, choisi parmi PA MPMDT/6T, PA 11/10T, PA 11/BACT, PA 5T/10T, PA 11/6T/10T, PA MXDT/4T, PA MXDT/6T, PA MXDT/10T, PA MPMDT/4T, PA MPMDT/6T, PA MPMDT/10T, PA BACT/10T, PA BACT/6T, PA BACT/4T, PA BACT/10T/6T, PA 11/BACT/4T, PA 11/BACT/6T, PA 11/BACT/10T, PA 11/MXDT/4T, PA 11/MXDT/6T, PA 11/MXDT/10T, PA 11/MPMDT/4T, PA 11/MPMDT/6T, PA 11/MPMDT/10T, PA 11/MXDT/10T, PA11/5T/10T, et leur mélange,

la couche d'étanchéité la plus externe étant soudée à la couche de renfort composite intermédiaire la plus interne et
la couche de renfort composite intermédiaire la plus externe étant soudée à la couche de renfort composite externe la plus interne.

Selon un mode de réalisation préféré, le réservoir selon l'invention comprend une structure multicouche, pour le stockage de gaz comprimé, en particulier l'hydrogène, comprenant au moins les trois couches successives suivantes, de l'intérieur vers l'extérieur :
- au moins une couche d'étanchéité consistant en une composition comprenant majoritairement au moins un polyamide thermoplastique semi-cristallin aliphatique présentant une Tf, mesurée selon la norme ISO 11357-3: 2013, inférieure ou égale à 280°C et choisi parmi PA410, PA 56, PA59, PA510, PA512, PA513, PA 514, PA6, PA 66, PA 69, PA610, PA612, PA614, PA618, PA1010, PA1012, PApip10, PApip12, PA1014, PA1018, PA1210, PA1212, PA1214, PA1218, PA11, PA12, de préférence PA 6, PA66, PA410, PA510, PA 69, PA610, PA 512, PA612, PA 514, PA614, PA618, PA1010, PA1012. PA1014, PA1018, PA1214, PA1218, PA11 et PA12, de préférence PA 11 ou PA12, et leur mélange,
- au moins une couche de renfort composite intermédiaire constituée d'un matériau fibreux sous forme de fibres continues imprégné par une composition comprenant majoritairement au moins un polyamide thermoplastique semi-cristallin aliphatique présentant une Tg mesurée selon la norme ISO 11357 -3: 2013, inférieure à 100°C, de préférence inférieure ou égale à 80°C, en particulier inférieure ou égale à 60°C, et choisi parmi PA410, PA 56, PA59, PA510, PA512, PA513, PA 514, PA6, PA 66, PA 69, PA610, PA612, PA614, PA618, PA1010, PA1012, PApip10, PApip12, PA1014, PA1018, PA1210, PA1212, PA1214, PA1218, PA11, PA12 de préférence PA 6, PA66, PA410, PA510, PA 69, PA610, PA 512, PA612, PA 514, PA614, PA618, PA PA1010, PA1012, PA1014, PA1018, PA1214, PA1218, PA11 et PA12, de préférence PA 11 ou PA12, et leur mélange,
- au moins une couche externe de renfort composite constituée d'un matériau fibreux sous forme de fibres continues imprégné par une composition comprenant majoritairement au moins un polyphtalamide présentant une Tg, mesurée selon la norme ISO 11357 -3: 2013, supérieure à 80° C, de préférence supérieure à 100°C, choisi parmi PA MPMDT/6T, PA 11/10T, PA 11/BACT, PA 5T/10T, PA 11/6T/10T, PA MXDT/4T, PA MXDT/6T, PA MXDT/10T, PA MPMDT/4T, PA MPMDT/6T, PA MPMDT/10T, PA BACT/10T, PA BACT/6T, PA BACT/4T, PA BACT/10T/6T, PA 11/BACT/4T, PA 11/BACT/6T, PA 11/BACT/10T, PA 11/MXDT/4T, PA 11/MXDT/6T, PA 11/MXDT/10T, PA 11/MPMDT/4T, PA 11/MPMDT/6T, PA 11/MPMDT/10T, PA 11/MXDT/10T, PA11/5T/10T, et leur mélange,

la couche d'étanchéité la plus externe étant soudée à la couche de renfort composite intermédiaire la plus interne et
la couche de renfort composite intermédiaire la plus externe étant soudée à la couche de renfort composite externe la plus interne.

Dans un autre mode de réalisation préféré, le réservoir selon l'invention comprend une structure multicouche, qui comprend
- une seule couche d'étanchéité en polyamide 6,
- une seule couche de renfort composite intermédiaire, dont la matrice est en polyamide 6 et
- une seule couche de renfort composite externe, dont la matrice est un copolyamide comprenant un motif BACT, c'est-à-dire de formule A/BACT,
la couche d'étanchéité étant soudée à la couche de renfort composite intermédiaire et la couche de renfort composite intermédiaire étant soudée à la couche de renfort composite externe.

Dans un autre mode de réalisation préféré, le réservoir selon l'invention comprend une structure multicouche, qui comprend
- une seule couche d'étanchéité en polyamide 66,
- une seule couche de renfort composite intermédiaire dont la matrice est en polyamide 66 et
- une seule couche de renfort composite externe, dont la matrice est un copolyamide comprenant un motif BACT, c'est-à-dire de formule A/BACT, A étant tel que défini ci-dessus,
la couche d'étanchéité étant soudée à la couche de renfort composite intermédiaire et la couche de renfort composite intermédiaire étant soudée à la couche de renfort composite externe.

Dans un autre mode de réalisation préféré, le réservoir selon l'invention comprend une structure multicouche, qui comprend
- une seule couche d'étanchéité en polyamide 11/10T,
- une seule couche de renfort composite intermédiaire dont la matrice est en polyamide 11/10T et
- une seule couche de renfort composite externe, dont la matrice est un copolyamide comprenant un motif 10T, c'est-à-dire de formule A/10T, A étant tel que défini ci-dessus,
la couche d'étanchéité étant soudée à la couche de renfort composite intermédiaire et la couche de renfort composite intermédiaire étant soudée à la couche de renfort composite externe.

Dans un autre mode de réalisation préféré, le réservoir selon l'invention comprend une structure multicouche, qui comprend
- une seule couche d'étanchéité en polyamide 11,
- une seule couche de renfort composite intermédiaire dont la matrice est en polyamide 11 et
- une seule couche de renfort composite externe, dont la matrice est un copolyamide comprenant un motif 10T, c'est-à-dire de formule A/10T, A étant tel que défini ci-dessus,
la couche d'étanchéité étant soudée à la couche de renfort composite intermédiaire et la couche de renfort composite intermédiaire étant soudée à la couche de renfort composite externe.

Dans un autre mode de réalisation préféré, le réservoir selon l'invention comprend une structure multicouche, qui comprend
- une seule couche d'étanchéité en polyamide 11,
- une seule couche de renfort composite intermédiaire dont la matrice est en polyamide 11 et
- une seule couche de renfort composite externe, dont la matrice est un copolyamide comprenant un motif 10T, c'est-à-dire de formule A/10T, A étant tel que défini ci-dessus,
la couche d'étanchéité étant soudée à la couche de renfort composite intermédiaire et la couche de renfort composite intermédiaire étant soudée à la couche de renfort composite externe.

De préférence, ladite couche de renfort composite intermédiaire présente de préférence de préférence une épaisseur comprise entre 1 et 10%, encore plus de préférée comprise entre 1 et 5% par rapport à l'épaisseur de la totalité des couches de renfort composite de la structure multicouche.

Avantageusement, la structure multicouche du réservoir de l'invention est constituée des trois couches définies dans les différents modes de réalisation décrits ci-dessus.

### S'agissant du réservoir

Selon un mode de réalisation, le réservoir selon l'invention peut comprendre la structure multicouche telle que définie ci-dessus et un ou plusieurs inserts.

Selon un autre mode de réalisation, le réservoir selon l'invention peut comprendre la structure multicouche telle que définie ci-dessus et une ou plusieurs embases.

Selon encore un autre mode de réalisation, le réservoir selon l'invention peut comprendre la structure multicouche telle que définie ci-dessus, un ou plusieurs inserts et une ou plusieurs embases.

Par « insert », on entend au sens de la présente invention, des pièces insérées avant ou pendant la dépose des couches de renfort composite. Les inserts visent à permettre l'assemblage du réservoir et d'une embase.

Les inserts peuvent être insérés au début de l'étape de fabrication du réservoir. Dans ce cas, ils sont des constituants de la couche d'étanchéité. Ils peuvent par exemple supporter par la suite les éléments de raccord des réservoirs dans le véhicule. Ces pièces peuvent ainsi être directement liées à la couche d'étanchéité initiale.

De préférence, le réservoir comporte un ou plusieurs inserts moulés par injection, en polymère thermoplastique semi-cristallin, de préférence aliphatique.

De préférence, l'insert comprend majoritairement au moins un polyamide thermoplastique semi-cristallin de Tf < 280°C, de préférence aliphatique.

De préférence, l'insert comprend au moins un polyamide choisi parmi PA410, PA 56, PA59, PA510, PA512, PA513, PA514, PA6, PA66, PA69, PA610, PA612, PA614, PA618, PA1010, PA1012, PApip10, PApip12, PA1014, PA1018, PA1210, PA1212, PA1214, PA1218, PA11, PA12, PA 11/5T, PA 11/6T et PA11/10T de préférence PA6, PA66, PA410, PA510, PA 69, PA610, PA 512, PA612, PA 514, PA614, PA618, PA1010, PA1012, PA1014, PA1018, PA1214, PA1218, PA11 et PA12, de préférence PA 11 ou PA12, et leur mélange.

Selon sa position dans la structure, l'insert est une pièce injectée, en le même polyamide thermoplastique semi-cristallin que la couche d'étanchéité ou que le polyamide thermoplastique semi-cristallin aliphatique compris dans la couche de renfort composite intermédiaire.

Selon un mode de réalisation du réservoir selon l'invention, il comprend la structure multicouche telle que définie ci-dessus, un ou plusieurs inserts et une ou deux embases, en particulier métalliques et surmoulées par un polyamide thermoplastique semi-cristallin de Tf < 280°C, de préférence aliphatique.

Lorsque le réservoir comporte une embase, elle peut être surmoulée par un polyamide thermoplastique semi-cristallin, de préférence aliphatique

De préférence, le polyamide de surmoulage de la ou les embases est choisi parmi PA410, PA 56, PA59, PA510, PA512, PA513, PA 514, PA6, PA 66, PA 69, PA610, PA612, PA614, PA618, PA1010, PA1012, PApip10, PApip12, PA1014, PA1018, PA1210, PA1212, PA1214, PA1218, PA11, PA12, PA 11/5T, PA 11/6T et PA11/10T de préférence PA6, PA66, PA410, PA510, PA 69, PA610, PA 512, PA612, PA 514, PA614, PA618, PA1010, PA1012, PA1014, PA1018. PA1214, PA1218, PA11 et PA12, de préférence PA 11 ou PA12, et leur mélange.

De préférence, le matériau du ou des inserts, le matériau de la couche, qui surmoule le ou les embases et le matériau compris dans la couche d'étanchéité sont les mêmes.

Dans le cas où la soudure entre l'embase du réservoir et l'insert ou la couche d'étanchéité est effectuée par induction, alors la composition utilisée pour le surmoulage de la partie métallique de l'embase et/ou la composition utilisée pour mouler l'insert comprend des particules métalliques ferro-magnétiques.

### Le procédé

La présente invention a également pour objet un procédé de fabrication d'un réservoir tel que défini ci-dessus. Le procédé comporte les étapes successives suivantes :
- au moins une étape de soudure de la couche intermédiaire de renfort composite sur la couche d'étanchéité et
- au moins une étape de soudure de la couche externe de renfort composite sur la couche intermédiaire de renfort composite.

Dans un mode de réalisation, le réchauffage du ou des rubans composites avant la soudure sur le réservoir, est effectuée par un système choisi parmi un chauffage infra-rouge (IR), un chauffage par led, un chauffage par induction ou par microondes ou chauffage hautes fréquences (HF). Le système de positionnement dudit ou desdits rubans composite au contact du réservoir est suffisamment rapide, de manière à ce que la température dudit ou desdits rubans reste au-dessus de la température de cristallisation de la résine constituant la matrice dudit composite composant ledit ruban, et de préférence 20°C au-dessus de cette température de cristallisation.

Avantageusement, le procédé consiste à déposer la couche de renfort composite intermédiaire suivi ou pas de la dépose d'une partie de la couche de renfort composite externe, sur l'ensemble constitué des inserts et de la couche d'étanchéité, puis à souder les embases sur les inserts, puis à finir la dépose du renfort composite externe.

Dans un autre mode de réalisation, les embases peuvent être soudées directement à la couche d'étanchéité. Ensuite, l'intégralité des couches composites : intermédiaire et externe est déposée.

### L'utilisation

L'invention porte enfin sur l'utilisation du réservoir tel que décrit ci-dessus pour le stockage de gaz sous pression, en particulier l'hydrogène, GPL, GNV, air comprimé, par exemple pour le stockage d'énergie.

Les exemples, qui suivent permettent d'illustrer la présente invention, mais ne sont en aucun cas limitatifs.

### Exemples

Dans les exemples suivants, des réservoirs selon l'invention et comparatifs ont été fabriqués. Les réservoirs selon l'invention comprennent des structures multicouches comprenant une couche de renfort composite intermédiaire. Les réservoirs comparatifs comprennent des structures multicouches, qui ne comprennent pas de couche de renfort composite intermédiaire.

Dans tous les exemples, les réservoirs sont fabriqués par enroulement des rubans (tape) thermoplastiques. Les rubans thermoplastiques sont réchauffés au moyen d'un chauffage IR. La dépose des rubans thermoplastiques est réalisée au moyen d'un robot à la vitesse de 12m/min.

Concernant les réservoirs selon l'invention, le procédé consiste à enrouler les rubans autour de la couche d'étanchéité, les rubans étant préalablement pré-imprégnés par la composition de la couche de renfort composite intermédiaire.

Ensuite, une étape d'enroulement de ruban thermoplastique est à nouveau réalisée, mais cette fois-ci, autour du renfort composite intermédiaire avec des rubans préalablement pré-imprégnés par la composition de la couche de renfort composite externe.

### Exemples 1 et 2

### Fabrication des réservoirs

La couche d'étanchéité dans les réservoirs 1 et 2 a été obtenue par enroulement d'un film en PA11 de température de fusion Tf = 190°C, autour d'un mandrin métallique. La fusion du film en PA11 permet de générer la couche d'étanchéité *in situ.* Des inserts en PA11 moulés par injection ont été également disposés sur le mandrin, avant la dépose des rubans composite. Les embases sont surmoulées en PA11.

Le mandrin métallique a été retiré après la dépose d'environ 1 à 30% de la totalité de l'épaisseur des renforts composites. Du PA11 de température de transition vitreuse Tg = 50°C a été utilisé pour imprégner les fibres de carbones de la couche de renfort composite intermédiaire. Des embases ont alors été soudées à l'ébauche de réservoir et le bobinage des rubans composite a été poursuivi jusqu'à la fin de la fabrication du réservoir final. Le tableau 1 ci-dessous reprend les matériaux de la structure multicouche du réservoir.

**Tableau 1**

| | Ex 1 Invention | Ex 2 Comparatif |
|---|---|---|
| Couche d'étanchéité | PA 11 | PA 11 |
| Insert | PA11 | PA11 |
| Polymère de surmoulage des embases | PA11 | PA11 |
| Couche composite intermédiaire | PA11 fibres de carbone | - |
| Couche composite externe | 11/BACT/10T (Tg = 140°C) fibres de carbone | 11/BACT/10T (Tg = 140°C) fibres de carbone |
| Déformation des inserts (ovalisation, déformation du plan de joint) | Acceptable | Inacceptable |
| Qualité des soudures embase sur insert | Bonne | Mauvaise |
| Délamination dans les couches de renfort composite | Non | Oui |

D'autres matériaux de la couche externe ont été testés pour réaliser les réservoirs selon l'invention. Le tableau 2 ci-dessous reprend les matériaux testés pour la composition qui imprègne les fibres de carbone de la couche de renfort composite externe.

**Tableau 2**

| Ex | PA de la couche externe | Tg (°C) |
|---|---|---|
| 11 | PA 11/6T/10T | 115 |
| 12 | 11/MPMDT/10T | 125 |
| 13 | MXDT/10T | 130 |
| 14 | 11/BACT/10T | 160 |
| 15 | BACT/10T | 140 |
| 16 | BACT/10T | 160 |
| 17 | 11/BACT/6T | 160 |
| 18 | MPMDT/10T | 125 |
| 19 | MXDT/6T | 150 |

Plusieurs épaisseurs de couche de la couche de renfort composite intermédiaire ont été testées : 1, 3, 5, 10, 15 et 30% par rapport à la totalité des couches de renfort composite de la structure.

### Evaluation des réservoirs

Les réservoirs ont été évalués visuellement. Il a été observé, si les inserts sont déformés, et notamment s'il y a une déformation du plan de joint et une ovalisation des inserts.

La qualité des soudures entre les embases et les inserts a également été observée. Si elle semble suffisamment bonne après inspection visuelle, la qualité des soudures des embases sur les inserts est testée au moyen d'une mise sous pression d'eau de l'ébauche de réservoir, de 4bars, pendant 12h. Si la soudure fuit avant la fin de cette période, la soudure est de mauvaise qualité. Dans le cas contraire, elle sera considérée comme bonne.

Les résultats figurent dans le tableau 1.

### Exemples 3 et 4

Le procédé de fabrication suivi pour les exemples 1 et 2 a été suivi pour réaliser les exemples 3 et 4.

**Tableau 3**

| | Ex 3 Invention | Ex 4 Comparatif |
|---|---|---|
| Couche d'étanchéité | PA 6 | PA 6 |
| Insert | PA6 | PA6 |
| Polymère de surmoulage des embases | PA6 | PA6 |
| Couche composite intermédiaire | PA6 fibres de carbone | - |
| Couche composite externe | 11/BACT/10T (Tg = 140°C) fibres de carbone | 11/BACT/10T (Tg = 140°C) fibres de carbone |
| Déformation des inserts (ovalisation, déformation du plan de joint) | Acceptable | Inacceptable |
| Qualité des soudures embase sur insert | Bonne | Mauvaise |
| Délamination dans les couches de renfort composite | Non | Oui |

Différents matériaux de la couche externe ont été testés pour réaliser les réservoirs selon l'invention. Le tableau 4 ci-dessous reprend les matériaux testés pour la composition qui imprègne les fibres de carbone de la couche de renfort composite externe.

**Tableau 4**

| Ex | PA de la couche externe | Tg (°C) |
|---|---|---|
| 31 | PA 11/6T/10T | 115 |
| 32 | 11/MPMDT/10T | 125 |
| 33 | MXDT/10T | 130 |
| 34 | 11/BACT/10T | 160 |
| 35 | BACT/10T | 140 |
| 36 | BACT/10T | 160 |
| 37 | 11/BACT/6T | 160 |
| 38 | MPMDT/10T | 125 |
| 39 | MXDT/6T | 150 |

Plusieurs épaisseurs de couche de la couche de renfort composite intermédiaire ont été testés : 1, 3, 5, 10, 15 et 30% par rapport à la totalité des couches de renfort composite de la structure.

### Exemples 5 et 6

Le procédé de fabrication suivi pour les exemples 1 et 2 a été suivi pour réaliser les exemples 5 et 6.

**Tableau 5**

| | Ex 5 Invention | Ex 6 Comparatif |
|---|---|---|
| Couche d'étanchéité | PA 66 | PA 66 |
| Insert | PA66 | PA66 |
| Polymère de surmoulage des embases | PA66 | PA66 |
| Couche composite intermédiaire | PA66 fibres de carbone | - |
| Couche composite externe | 11/BACT/10T (Tg = 140°C) fibres de carbone | 11/BACT/10T (Tg = 140°C) fibres de carbone |
| Déformation des inserts (ovalisation, déformation du plan de joint) | Acceptable | Inacceptable |
| Qualité des soudures embase sur insert | Bonne | Mauvaise |
| Délamination dans les couches de renfort composite | Non | Oui |

Différents matériaux de la couche externe ont été testés pour réaliser les réservoirs selon l'invention. Le tableau 6 ci-dessous reprend les matériaux testés pour la composition qui imprègne les fibres de carbone de la couche de renfort composite externe.

**Tableau 6**

| Ex | PA de la couche externe | Tg (°C) |
|---|---|---|
| 51 | PA 11/6T/10T | 115 |
| 52 | 11/MPMDT/10T | 125 |
| 53 | MXDT/10T | 130 |
| 54 | 11/BACT/10T | 160 |
| 55 | BACT/10T | 140 |
| 56 | BACT/10T | 160 |
| 57 | 11/BACT/6T | 160 |
| 58 | MPMDT/10T | 125 |
| 59 | MXDT/6T | 150 |

Plusieurs épaisseurs de couche de la couche de renfort composite intermédiaire ont été testés : 1, 3, 5, 10, 15 et 30% par rapport à la totalité des couches de renfort composite de la structure.

### Exemple 7

La couche d'étanchéité dans le réservoir de l'exemple 7 a été obtenue par rotomoulage. Le réservoir de l'exemple 7 ne comporte pas d'insert.

Le réservoir a été évalués visuellement après découpe en 2 parties. La qualité de la soudure de la couche composite intermédiaire sur la couche d'étanchéité a été évaluée ainsi que la qualité de la soudure des couches composites entre elles par observation de la coupe transversale du réservoir. Si l'inspection visuelle conduit à l'observation de délaminations dans l'épaisseur du réservoir, on conclut à une mauvaise qualité de la soudure des tapes sur la couche d'étanchéité ou des tapes entres elles.

| | Ex 7 Invention |
|---|---|
| Couche d'étanchéité | PA 11 |
| Couche composite Intermédiaire | PA11 fibres de carbone |
| Couche composite Externe | 11/BACT/10T (Tg = 140°C) fibres de carbone |
| Délamination dans les couches de renfort composite | non |
| Qualité de la soudure de la couche d'étanchéité sur la couche composite intermédiaire | Bonne |

Les résultats de l'ensemble de ces exemples montrent les avantages liés à la présence de la couche intermédiaire dans la structure du réservoir.

## Revendications

1. Réservoir comprenant une structure multicouche, pour le stockage de gaz comprimé, de préférence sous haute pression, en particulier l'hydrogène, comprenant au moins les trois couches successives suivantes, de l'intérieur vers l'extérieur :
- au moins une couche d'étanchéité consistant en une composition comprenant majoritairement au moins un polyamide thermoplastique semi-cristallin, de préférence aliphatique, présentant une température de fusion (Tf), mesurée selon la norme ISO 11357-3 : 2013, inférieure ou égale à 280°C, de préférence inférieure ou égale à 260°C, de préférence inférieure ou égale à 230°C, et plus particulièrement inférieure ou égale à 200°C,
- au moins une couche de renfort composite intermédiaire constituée d'un matériau fibreux sous forme de fibres continues imprégné par une composition comprenant majoritairement au moins un polyamide thermoplastique semi-cristallin, de préférence aliphatique, présentant une température de transition vitreuse (Tg) mesurée selon la norme ISO 11357 -3 : 2013, inférieure à 100°C, de préférence inférieure ou égale à 80°C, en particulier inférieure ou égale à 60°C,
- au moins une couche externe de renfort composite constituée d'un matériau fibreux sous forme de fibres continues imprégné par une composition comprenant majoritairement au moins un polyphtalamide présentant une température de transition vitreuse (Tg), mesurée selon la norme ISO 11357 -3 : 2013, supérieure à 80° C, de préférence supérieure ou égale à 100°C,
la couche d'étanchéité la plus externe étant soudée à la couche de renfort composite intermédiaire la plus interne et
la couche de renfort composite intermédiaire la plus externe étant soudée à la couche de renfort composite externe la plus interne.

2. Réservoir selon la revendication 1, **caractérisé en ce que** le polyamide thermoplastique semi-cristallin compris dans la couche d'étanchéité présente un rapport C/N supérieur ou égal à 5, de préférence supérieur ou égal à 8, en particulier supérieur ou égale à 9, et plus particulièrement supérieure ou égale à 10.

3. Réservoir selon la revendication 1 ou 2, **caractérisé en ce que** le polyamide thermoplastique semi-cristallin compris dans la couche d'étanchéité est choisi parmi PA410, PA 56, PA59, PA510, PA512, PA513, PA 514, PA6, PA 66, PA 69, PA610, PA612, PA614, PA618, PA1010, PA1012, PApip10, PApip12, PA1014, PA1018, PA1210, PA1212, PA1214, PA1218, PA11, PA12, PA 11/5T, PA 11/6T et PA11/10T, de préférence PA6, PA66, PA410, PA510, PA69, PA610, PA 512, PA612, PA 514, PA614, PA618, PA1010, PA1012, PA1014, PA1018. PA1214, PA1218, PA11 et PA12, de manière encore préférée PA 11 ou PA12, et leur mélange.

4. Réservoir selon la revendication 1 ou 2, **caractérisé en ce que** le polyamide thermoplastique semi-cristallin compris dans la couche d'étanchéité est un polyamide aliphatique, de préférence choisi parmi PA410, PA 56, PA59, PA510, PA512, PA513, PA 514, PA6, PA 66, PA 69, PA610, PA612, PA614, PA618, PA1010, PA1012, PApip10, PApip12, PA1014, PA1018, PA1210, PA1212, PA1214, PA1218, PA11, PA12, de préférence PA6, PA66, PA410, PA510, PA 69, PA610, PA 512, PA612, PA 514, PA614, PA618, PA1010, PA1012, PA1014, PA1018, PA1214, PA1218, PA11 et PA12, de manière encore préférée PA 11 ou PA12, et leur mélange.

5. Réservoir selon l'une quelconque des revendications précédentes, **caractérisé en ce que** le polyamide thermoplastique semi-cristallin imprégnant les fibres continues de la couche intermédiaire de renfort composite est choisi parmi PA410, PA 56, PA59, PA510, PA512, PA513, PA514, PA6, PA66, PA69, PA610, PA612, PA614, PA618, PA1010, PA1012, PApip10, PApip12, PA1014, PA1018, PA1210, PA1212, PA1214, PA1218, PA11, PA12, PA 11/5T, PA 11/6T et PA11/10T, de préférence PA6, PA66, PA410, PA510, PA 69, PA610, PA 512, PA612, PA 514, PA614, PA618, PA1010, PA1012, PA1014, PA1018, PA1214, PA1218, PA11 et PA12, de manière encore préférée PA 11 ou PA12, et leur mélange.

6. Réservoir selon l'une quelconque des revendications 1 à 4, **caractérisé en ce que** le polyamide thermoplastique semi-cristallin imprégnant les fibres continues de la couche intermédiaire de renfort composite est un polyamide aliphatique, de préférence, choisi parmi PA410, PA 56, PA59, PA510, PA512, PA513, PA 514, PA6, PA 66, PA 69, PA610, PA612, PA614, PA618, PA1010, PA1012, PApip10, PApip12, PA1014, PA1018, PA1210, PA1212, PA1214, PA1218, PA11, PA12, de préférence PA6, PA66, PA410, PA510, PA 69, PA610, PA 512, PA612, PA 514, PA614, PA618, PA1010, PA1012, PA1014, PA1018. PA1214, PA1218, PA11 et PA12, de manière encore préférée PA 11 ou PA12, et leur mélange.

7. Réservoir selon l'une quelconque des revendications précédentes, **caractérisé en ce que** le polyamide thermoplastique semi-cristallin imprégnant les fibres continues de la couche externe de renfort composite est choisi parmi PA MPMDT/6T, PA 11/10T, PA 11/BACT, PA 5T/10T, PA 11/6T/10T, PA MXDT/4T, PA MXDT/6T, PA MXDT/10T, PA MPMDT/4T, PA MPMDT/6T, PA MPMDT/10T, PA BACT/10T, PA BACT/6T, PA BACT/4T, PA BACT/10T/6T, PA 11/BACT/4T, PA 11/BACT/6T, PA 11/BACT/10T, PA 11/MXDT/4T, PA 11/MXDT/6T, PA 11/MXDT/10T, PA 11/MPMDT/4T, PA 11/MPMDT/6T, PA 11/MPMDT/10T, PA 11/MXDT/10T, PA11/5T/10T, et leur mélange.

8. Réservoir selon l'une quelconque des revendications précédentes, **caractérisé en ce que** la couche de renfort composite intermédiaire a une épaisseur comprise entre 1 et 30%, plus particulièrement une épaisseur comprise entre 1 et 10%, encore plus de préférée comprise entre 1 et 5% par rapport à la totalité de l'épaisseur des couches de renfort composite de la structure.

9. Réservoir selon l'une quelconque des revendications précédentes, **caractérisé en ce que** le matériau fibreux présent dans la couche de renfort composite intermédiaire et dans la couche de renfort composite externe est choisi parmi des fibres de verre, des fibres de carbone, les fibres de basalte ou est à base de basalte.

10. Réservoir selon l'une quelconque des revendications précédentes, **caractérisé en ce qu'**il comporte un ou plusieurs inserts moulés par injection, en polymère thermoplastique semi-cristallin, de préférence aliphatique.

11. Procédé de fabrication du réservoir tel que défini à l'une quelconque des revendications précédentes, **caractérisé en ce qu'**il comprend les étapes successives suivantes :
- au moins une étape de soudure de la couche de renfort composite intermédiaire sur la couche d'étanchéité et
- au moins une étape de soudure de la couche de renfort composite externe sur la couche de renfort composite intermédiaire.

12. Utilisation du réservoir tel que défini à l'une quelconque des revendications 1 à 10 pour le stockage de gaz sous pression, de préférence sous haute pression, en particulier l'hydrogène, GPL ou GNV, air comprimé.

## Patentansprüche

1. Speicherbehälter, umfassend eine mehrschichtige Struktur, zum Speichern von verdichtetem Gas, vorzugsweise unter hohem Druck, insbesondere Wasserstoff, der umfassend mindestens die folgenden drei aufeinanderfolgenden Schichten von innen nach außen:
- mindestens eine Abdichtungsschicht, die aus einer Zusammensetzung besteht, umfassend mehrheitlich mindestens ein teilkristallines, vorzugsweise aliphatisches thermoplastisches Polyamid, das eine Schmelztemperatur (Tf), gemessen nach der Norm ISO 11357-3:2013, von niedriger als oder gleich wie 280 °C, vorzugsweise niedriger als oder gleich wie 260 °C, vorzugsweise niedriger als oder gleich wie 230 °C und insbesondere niedriger als oder gleich wie 200 °C aufweist,
- mindestens eine zwischenliegende Verbundverstärkungsschicht, die aus einem Fasermaterial in Form von Endlosfasern besteht, das mit einer Zusammensetzung imprägniert ist, umfassend mehrheitlich mindestens ein teilkristallines, vorzugsweise aliphatisches thermoplastisches Polyamid, das eine Glasübergangstemperatur (Tg), gemessen nach der Norm ISO 11357-3:2013, von niedriger als 100 °C, niedriger als oder gleich wie 80 °C, insbesondere niedriger als oder gleich wie 60 °C, aufweist,
- mindestens eine äußere Verbundverstärkungsschicht, die aus einem Fasermaterial in Form von Endlosfasern besteht, das mit einer Zusammensetzung imprägniert ist, umfassend mehrheitlich mindestens ein Polyphthalamid, das eine Glasübergangstemperatur (Tg), gemessen nach der Norm ISO 11357-3:2013, von höher als 80 °C, vorzugsweise höher als oder gleich wie 100 °C, aufweist,
wobei die äußerste Abdichtungsschicht an die innerste zwischenliegende Verbundverstärkungsschicht geschweißt ist, und
die äußerste zwischenliegende Verbundverstärkungsschicht an die innerste äußere Verbundverstärkungsschicht geschweißt ist.

2. Speicherbehälter nach Anspruch 1, **dadurch gekennzeichnet, dass** das in der Abdichtungsschicht enthaltene teilkristalline thermoplastische Polyamid ein Verhältnis C/N von größer als oder gleich wie 5, vorzugsweise größer als oder gleich wie 8, insbesondere größer als oder gleich wie 9 und ganz besonders größer als oder gleich wie 10 aufweist.

3. Speicherbehälter nach Anspruch 1 oder 2, **dadurch gekennzeichnet, dass** das in der Abdichtungsschicht enthaltene teilkristalline thermoplastische Polyamid ausgewählt ist aus PA410, PA 56, PA59, PA510, PA512, PA513, PA 514, PA6, PA 66, PA 69, PA610, PA612, PA614, PA618, PA1010, PA1012, PApip10, PApip12, PA1014, PA1018, PA1210, PA1212, PA1214, PA1218, PA11, PA12, PA 11/5T, PA 11/6T und PA11/10T, vorzugsweise PA6, PA66, PA410, PA510, PA69, PA610, PA512, PA612, PA514, PA614, PA618, PA1010, PA1012, PA1014, PA1018, PA1214, PA1218, PA11 und PA12, bevorzugter PA 11 oder PA12 und deren Gemischen.

4. Speicherbehälter nach Anspruch 1 oder 2, **dadurch gekennzeichnet, dass** das in der Abdichtungsschicht enthaltene teilkristalline thermoplastische Polyamid ein aliphatisches Polyamid ist, vorzugsweise ausgewählt aus PA410, PA 56, PA59, PA510, PA512, PA513, PA 514, PA6, PA 66, PA 69, PA610, PA612, PA614, PA618, PA1010, PA1012, PApip10, PApip12, PA1014, PA1018, PA1210, PA1212, PA1214, PA1218, PA11, PA12, vorzugsweise PA6, PA66, PA410, PA510, PA 69, PA610, PA 512, PA612, PA 514, PA614, PA618, PA1010, PA1012, PA1014, PA1018, PA1214, PA1218, PA11 und PA12, bevorzugter PA 11 oder PA12 und deren Gemischen.

5. Speicherbehälter nach einem der vorherigen Ansprüche, **dadurch gekennzeichnet, dass** das teilkristalline thermoplastische Polyamid, mit dem die Endlosfasern der zwischenliegenden der Verbundverstärkungsschicht imprägniert sind, ausgewählt ist aus PA410, PA56, PA59, PA510, PA512, PA513, PA514, PA6, PA66, PA69, PA610, PA612, PA614, PA618, PA1010, PA1012, PApip10, PApip12, PA1014, PA1018, PA1210, PA1212, PA1214, PA1218, PA11, PA12, PA 11/5T, PA 11/6T und PA11/10T, vorzugsweise PA6, PA66, PA410, PA510, PA 69, PA610, PA 512, PA612, PA 514, PA614, PA618, PA1010, PA1012, PA1014, PA1018, PA1214, PA1218, PA11 und PA12, bevorzugter PA11 oder PA12 und deren Gemischen.

6. Speicherbehälter nach einem der Ansprüche 1 bis 4, **dadurch gekennzeichnet, dass** das teilkristalline thermoplastische Polyamid, mit dem die Endlosfasern der zwischenliegenden Verbundverstärkungsschicht imprägniert sind, ein aliphatisches Polyamid ist, vorzugsweise ausgewählt aus PA410, PA 56, PA59, PA510, PA512, PA513, PA 514, PA6, PA 66, PA 69, PA610, PA612, PA614, PA618, PA1010, PA1012, PApip10, PApip12, PA1014, PA1018, PA1210, PA1212, PA1214, PA1218, PA11, PA12, vorzugsweise PA6, PA66, PA410, PA510, PA 69, PA610, PA512, PA612, PA514, PA614, PA618, PA1010, PA1012, PA1014, PA1018, PA1214, PA1218, PA11 und PA12, bevorzugter PA 11 oder PA12 und deren Gemischen.

7. Speicherbehälter nach einem der vorherigen Ansprüche, **dadurch gekennzeichnet, dass** das teilkristalline thermoplastische Polyamid, mit dem die Endlosfasern der äußeren Schicht der Verbundverstärkung imprägniert sind, ausgewählt ist aus PA MPMDT/6T, PA 11/10T, PA 11/BACT, PA 5T/10T, PA 11/6T/10T, PA MXDT/4T, PA MXDT/6T, PA MXDT/10T, PA MPMDT/4T, PA MPMDT/6T, PA MPMDT/10T, PA BACT/10T, PA BACT/6T, PA BACT/4T, PA BACT/10T/6T, PA 11/BACT/4T, PA 11/BACT/6T, PA 11/BACT/10T, PA 11/MXDT/4T, PA 11/MXDT/6T, PA 11/MXDT/10T, PA 11/MPMDT/4T, PA 11/MPMDT/6T, PA 11/MPMDT/10T, PA 11/MXDT/10T, PA11/5T/10T, und deren Gemischen.

8. Speicherbehälter nach einem der vorherigen Ansprüche, **dadurch gekennzeichnet, dass** die mittlere Verbundverstärkungsschicht eine Stärke zwischen 1 und 30 %, insbesondere eine Stärke zwischen 1 und 10 %, noch bevorzugter zwischen 1 und 5 % bezogen auf die Gesamtstärke der Verbundverstärkungsschichten der Struktur umfasst.

9. Speicherbehälter nach einem der vorherigen Ansprüche, **dadurch gekennzeichnet, dass** das Fasermaterial, das in der zwischenliegenden Verbundverstärkungsschicht und in der äußeren Verbundverstärkungsschicht vorhanden ist, ausgewählt ist aus Glasfasern, Kohlenstofffasern, Basaltfasern oder auf Basalt basiert.

10. Speicherbehälter nach einem der vorherigen Ansprüche, **dadurch gekennzeichnet, dass** sie einen oder mehrere spritzgegossene Einsätze aus einem teilkristallinen, vorzugsweise aliphatischen, thermoplastischen Polymer umfasst.

11. Herstellungsverfahren des Speicherbehälters, wie er in einem der vorherigen Ansprüche definiert ist, **dadurch gekennzeichnet, dass** es die folgenden aufeinanderfolgenden Schritte umfasst:
- mindestens einen Schritt eines Schweißens der zwischenliegenden Verbundverstärkungsschicht an Abdichtungsschicht, und
- mindestens einen Schritt eines Schweißens der äußeren Verbundverstärkungsschicht an die zwischenliegende Verbundverstärkungsschicht.

12. Verwendung des Speicherbehälters wie definiert in einem der Ansprüche 1 bis 10 zum Speichern von Gasen unter Druck, vorzugsweise unter Hochdruck, insbesondere Wasserstoff, LPG oder CNG, Druckluft.

## Claims

1. A tank comprising a multilayer structure, for the storage of compressed gas, preferentially under high pressure, more particularly hydrogen, comprising at least the following three successive layers, from the inside to the outside:
- at least one sealing layer consisting of a composition comprising on a majority basis at least one semi-crystalline thermoplastic polyamide, preferentially aliphatic, having a melting temperature (Tf), measured according to the standard ISO 11357-3: 2013, less than or equal to 280°C, preferentially less than or equal to 260°C, preferentially less than or equal to 230°C, and more particularly less than or equal to 200°C,
- at least one intermediate composite reinforcing layer consisting of a fibrous material in the form of continuous fibers impregnated with a composition comprising on a majority basis at least one semi-crystalline thermoplastic polyamide, preferentially aliphatic, having a glass transition temperature(Tg) measured according to the standard ISO 11357 -3 : 2013, less than 100°C, preferentially less than or equal to 80°C, more particularly less than or equal to 60°C,
- at least one outer composite reinforcing layer consisting of a fibrous material in the form of continuous fibers impregnated with a composition comprising on a majority basis at least one polyphthalamide having a glass transition temperature (Tg), measured according to the standard ISO standard 11357-3 2013, higher than 80ºC, preferentially greater than or equal to 100°C,
the outermost sealing layer being welded to the innermost intermediate composite reinforcing layer and
the outermost intermediate composite reinforcing layer being welded to the innermost outer composite reinforcing layer.

2. The tank according to claim 1, **characterized in that** the semi-crystalline thermoplastic polyamide comprised in the sealing layer has a C/N ratio greater than or equal to 5, preferentially greater than or equal to 8, more particularly greater than or equal to 9, and more particularly greater than or equal to 10.

3. The tank according to claim 1 or 2, **characterized in that** the semi-crystalline thermoplastic polyamide comprised in the sealing layer is chosen from PA410, PA 56, PA59, PA510, PA512, PA513, PA 514, PA6, PA 66, PA 69, PA610, PA612, PA614, PA618, PA1010, PA1012, PApip10, PApip12, PA1014, PA1018, PA1210, PA1212, PA1214, PA1218, PAII, PA12, PA 11/5T, PA 11/6T AND PA11/10T, preferentially PA 6, PA66, PA410, PA510, PA 69, PA610, PA 512, PA612, PA 514, PA614, PA618, PA1010, PA1012, PA1014, PA1018, PA1214, PA1218, PA11 and PA12, more preferentially PA 11 or PA12, and mixtures thereof.

4. The tank according to claim 1 or 2, **characterized in that** the semi-crystalline thermoplastic polyamide comprised in the sealing layer is an aliphatic polyamide, preferentially chosen from PA410, PA 56, PA59, PA510, PA512, PA513, PA 514, PA6, PA 66, PA 69, PA610, PA612, PA614, PA618, PA1010, PA1012, PApip10, PApip12, PA1014, PA1018, PA1210, PA1212, PA1214, PA1218, PA11, PA12, preferentially PA6, PA66, PA410, PA510, PA 69, PA610, PA 512, PA612, PA 514, PA614, PA618, PA1010, PA1012, PA1014, PA1018, PA1214, PA1218, PA11 and PA12, more preferentially PA 11 or PA12, and mixtures thereof.

5. The tank according to any of the preceding claims, **characterized in that** the semi-crystalline thermoplastic polyamide impregnating the continuous fibers of the intermediate composite reinforcing layer is chosen from PA410, PA 56, PA59, PA510, PA512, PA513, PA 514, PA6, PA 66, PA 69, PA610, PA612, PA614, PA618, PA1010, PA1012, PApip10, PApip12, PA1014, PA1018, PA1210, PA1212, PA1214, PA1218, PA11, PA12, PA 11/5T, PA 11/6T AND PA11/10T, preferentially PA6, PA66, PA410, PA510, PA 69, PA610, PA 512, PA612, PA 514, PA614, PA618, PA1010, PA1012, PA1014, PA1018, PA1214, PA1218, PA11 and PA12, more preferentially PA 11 or PA12, and mixtures thereof.

6. The tank according to any of claims 1 to 4, **characterized in that** the semi-crystalline thermoplastic polyamide impregnating the continuous fibers of the intermediate composite reinforcing layer is an aliphatic polyamide, preferentially chosen from PA410, PA 56, PA59, PA510, PA512, PA513, PA 514, PA6, PA 66, PA 69, PA610, PA612, PA614, PA618, PA1010, PA1012, PApip10, PApip12, PA1014, PA1018, PA1210, PA1212, PA1214, PA1218, PA11, PA12, preferentially PA6, PA66, PA410, PA510, PA 69, PA610, PA 512, PA612, PA 514, PA614, PA618, PA1010, PA1012, PA1014, PA1018, PA1214, PA1218, PA11 and PA12, yet preferentially PA 11 or PA12, and mixtures thereof.

7. The tank according to any of the preceding claims, **characterized in that** the semi-crystalline thermoplastic polyamide impregnating the continuous fibers of the composite outer reinforcing layer is chosen from PA MPMDT/6T, PA 11/10T, PA 11/BACT, PA 5T/10T, PA 11/6T/10T, PA MXDT/4T PA, MXDT/6T PA, MXDT/10T PA, MPMDT/4T PA, MPMDT/6T PA, PA MPMDT/10T, PA BACT/10T, PA BACT/6T, PA BACT/4T, PA BACT/10T/6T, PA 11/BACT/4T, PA 11/BACT/6T, PA 11/BACT/10T, PA 11/MXDT/4T, PA 11/MXDT/6T, PA 11/MXDT/10T, PA 11/MPMDT/4T, PA 11/MPMDT/6T, PA 11/MPMDT/10T, PA 11/MXDT/10T, PA11/5T/10T, and mixture thereof.

8. The tank according to any of the preceding claims, **characterized in that** the intermediate composite reinforcing layer has a thickness comprised between 1 and 30%, more particularly a thickness comprised between 1 and 10%, even more preferentially comprised between 1 and 5% with respect to the total thickness of the composite reinforcing layers of the structure.

9. The tank according to any of the preceding claims, **characterized in that** the fibrous material present in the intermediate composite reinforcing layer and in the outer composite reinforcing layer is chosen from glass fibers, carbon fibers, basalt fibers or contains basalt.

10. The tank according to any of the preceding claims, **characterized in that** the tank comprises one or a plurality of injection-molded inserts of semi-crystalline, preferentially aliphatic, thermoplastic polymer.

11. A method of manufacturing the tank as defined in any of the preceding claims, **characterized in that** the method comprises the following successive steps:
- at least one step of welding the intermediate composite reinforcing layer over the sealing layer and
- at least one step of welding the outer composite reinforcing layer over the intermediate composite reinforcing layer.

12. A use of the tank as defined in any of claims 1 to 10 for storing gases under pressure, preferentially under high pressure, more particularly hydrogen, LPG or CNG, compressed air.
